# EUROPEAN PATENT SPECIFICATION

(11) **EP 1 037 796 B1**
(45) Date of publication and mention of the grant of the patent: **17.07.2002**
(21) Application number: 98962657.7
(22) Date of filing: 09.12.1998
(51) Int. Cl.: B64C 29/02

(54) **VERTICAL TAKE-OFF AND LANDING, AERODYNAMICALLY SELF-SUSTAINED HORIZONTAL FLIGHT HYBRID AIRCRAFT**
HYBRIDES, INTEGRIERTES FLUGZEUG MIT VERTIKAL- UND HORIZONTALFLUGEIGENSCHAFTEN
AVION HYBRIDE A DECOLLAGE ET ATTERRISSAGE VERTICAUX, A VOL HORIZONTAL ET A AUTOSUSTENTATION AERODYNAMIQUE

(30) Priority: 10.12.1997 IT RM970763
(43) Date of publication of application: 27.09.2000
(73) Proprietor: Capanna, Franco, 00188 Roma (IT)
(72) Inventor: Capanna, Franco, 00188 Roma (IT)
(74) Representative: Iannone, Carlo Luigi
(86) International application number: IT9800356
(87) International publication number: WO9929569

(56) References cited:
- DE-A- 4 405 975
- FR-A- 1 180 818
- FR-A- 2 619 354
- US-A- 2 668 026
- US-A- 3 582 021
- US-A- 3 823 898

## Description

The present invention relates to a vertical take-off and landing, aerodynamically self-sustained horizontal flight hybrid aircraft.

More particularly, the invention relates to a new conception of an aircraft able to vertically land and take-off and to horizontally flight with an aerodynamically self-sustained flying, maintaining the passengers always in the optimum flying position.

A vertical take-off and landing, aerodynamically self-sustained horizontal flight hybrid aircraft according to the preamble of claim 1 is known from DE 4 405 975 A.

As it is well known, main advantage, under a practical point of view, of the vertical take-off and landing aircrafts, also know as VTOL (Vertical Take-Off Landing), now ignoring problems connected with the increase costs, is the capability of reaching and draw anyone, everything, everywhere when used for transportation and environment and civil protection services.

These advantages are counterbalanced by the high operative costs of the existing VTOL technology, particularly referred to the helicopters, with respect to the other vehicles and transportation systems.

Increased costs are due to the very high amount of power necessary to sustain the helicopter during its horizontal flight, in view of the absence of aerodynamical sustaining thrust of the fixed wings which provided in the traditional aircrafts.

On the other side, this drawback is partially reduced in view of the absence of transportation costs and time from the town to the airport, since it is possible to directly land downtown, the heliport requiring a reduced space with respect to the traditional airports, thus saving time, and requiring embarkation procedures simplified.

Main object of the present invention is that of merging capability of VTOL aircrafts with the horizontal flight powered by turbo-propulsors or jet engines which remarkably cheaper (in the following this hybrid feature will be indicated by VTOL-HF - Vertical Take-Off Landing - Horizontal Flight).

It is also known to those skilled in the art that two model of aircraft provided with interchangeable integrated VTOL-HF characteristics have been already developed in the international aerospace industry, namely Harrier and V-22 Osprey.

Harriers are military jet aircrafts made in Great Britain by a British Arerospace and McDonnel Douglas joint-venture.

Instead, V-22 Osprey are military turbo-propulsor aircrafts, providing a tiltable rotor - engine group and are made in the United States by Bell Textron and Boeing. It has already been foreseen the realisation of a civil version.

As far as Harrier are concerned, VTOL capability is obtained rotating downward the thrust of its main jet engines during the take-off/landing steps.

Instead, V-22 Osprey VTOL-HF are based on the direct use of the same main engines and of the relevant thrust mechanisms both in the helicopter mode (VTOL) and as turbo propeller (HF) rotating (tilting) **from the above toward the bottom** the main engines provided at the ends of the wings.

Thrust mechanisms of V-22 are designed on the basis of a compromise between big propellers and rotor blades, being it necessary to obtain that they work as turbo propeller (HF) and as helicopter (VTOL).

Both solutions concern aircrafts specifically dedicated, particularly designed to be used as VTOL-HF: when they are flying horizontally they uses the same main engines sized on the basis of the maximum thrust necessary for vertical take-off and landing, with a consequent impact on the operative costs.

In a patent application filed on same date, the Applicant has suggested a system to transform a vertical take-off and self-sustained horizontal flight aircraft into self-sustained horizontal flight, vertical landing and take-off, hybrid integrated aircraft, which allows to exploit the VTOL-HF technology as a retrofitting technology for existing aircrafts.

Instead, main object of the present invention is that of realising a new vertical take-off and landing, aerodynamically self-sustained horizontal flight hybrid aircraft (VTOL-HF) able to provide an economic service and having a high flexibility in the freight - passenger transportation market and in the civil protection services.

Further object of the present invention is that of providing a new VTOL-HF aircraft able to merge the VTOL capability with the turbo propulsion thrust, or jet, self-sustained horizontal flight, efficient under the cost saving point of view, maintaining substantial differences with respect to the existing models.

The solution suggested according to the present invention is comprised of a new aircraft, provided with fixed support wings, carrying out the take-off and landing steps with he back part rest on the ground and the front portion directed upward, and thus, once reached a useful elevation with said vertical position, it progressively changes the attitude toward a horizontal position by the support of tiltable auxiliary engines provided on the back portion of the same vehicle, but maintaining the main engine in a fixed position and the double use rotor(s)/propeller(s) (vertical-horizontal) fixed on the front tip of the aircraft.

It is therefore specific object of the present invention a vertical take-off and landing, aerodynamically self-sustained horizontal flight hybrid aircraft comprising a propulsion system providing at least a fixed blade propeller/rotor on the front part of the aircraft, connected to the main engine (s) of the aircraft, and at least one auxiliary engine, placed in the rear part of the aircraft, said auxiliary engine being progressively tiltable and swingable between two limit positions, respectively a vertical and a horizontal position, the piloting cabin and the passenger area being realised as swingable modules, in such a way to continuously maintain the horizontal position of the pavement and of the ceiling parallel with respect to the ground during each flying phase, i.e. during the take-off, the transition phase and the horizontal flight, and vice versa, said aircraft taking-off with a vertical attitude (front portion upward) and progressively changing the attitude, by the help of the rear auxiliary tiltable engines, reaching a completely horizontal attitude, and vice versa, and coming back in the vertical attitude during the landing.

According to the invention, said propulsion system can also be actuated by a hydraulic system.

Still according to the invention, coupling between the main engine(s) and said at least one blade propeller/rotor can be of the mechanical of hydraulic kind, and the same main engine(s) can be placed in any suitable position within the aircraft.

Always according to the invention, said at least one tiltable auxiliary engine can be comprised of at least one jet engine or a rocket or of at least a hydraulically powered or not, ducted turbofan propeller, or any other suitable thrust means.

Further, according to the invention, said at least one blade rotor can be realised in such a way to obtain both a vertical thrust, when the aircraft has a vertical attitude, and a horizontal thrust, when the aircraft has an horizontal attitude.

Finally, according to the invention, more tiltable auxiliary engines can be provided to support the take-off and landing phases and swinging to guarantee the transition phase between vertical flight and horizontal flight and vice versa.

The present invention will be now described, for illustrative but not limitative purposes, according to its preferred embodiments, with particular reference to the figures of the enclosed drawings, wherein:
figure 1 is a schematic view of a first embodiment of an aircraft according to the invention;
figure 2 is a schematic view of a second embodiment of an aircraft according to the invention;
figure 3 is a schematic view of a third embodiment of an aircraft according to the invention;
figure 4 is a schematic view of a fourth embodiment of an aircraft according to the invention;
figure 5 is a schematic view of a fifth embodiment of an aircraft according to the invention; and
figure 6 schematically shows the different situation of take-off, landing, and take-off of the aircraft according to the invention.

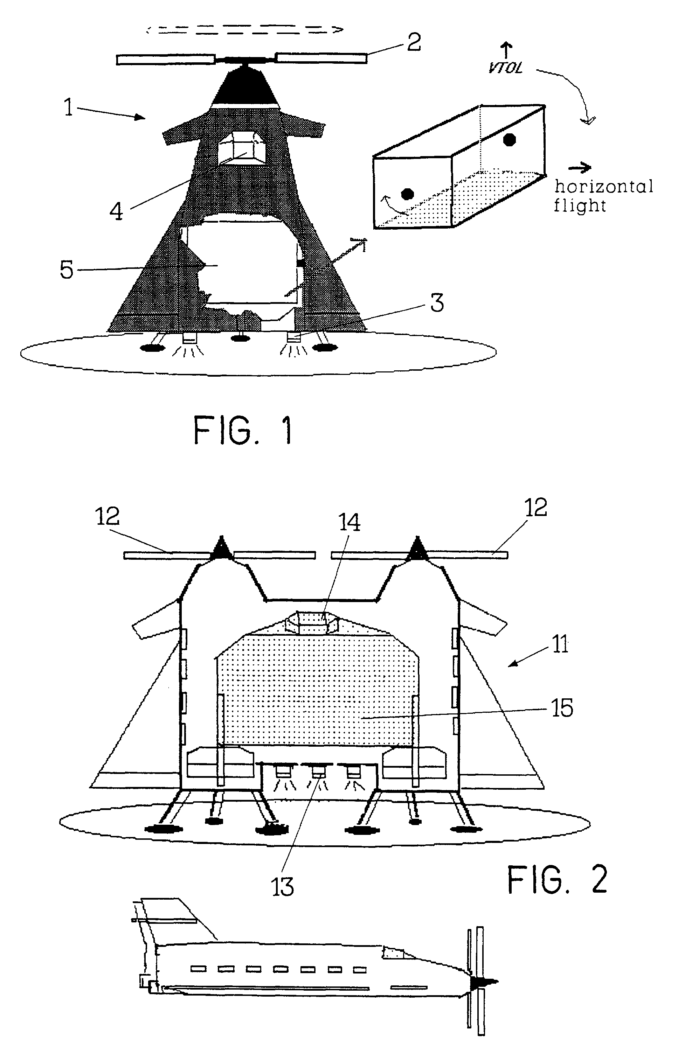

In figure 1, an aircraft 1 according to the invention is shown, realised also with a swingable module for the freightage.

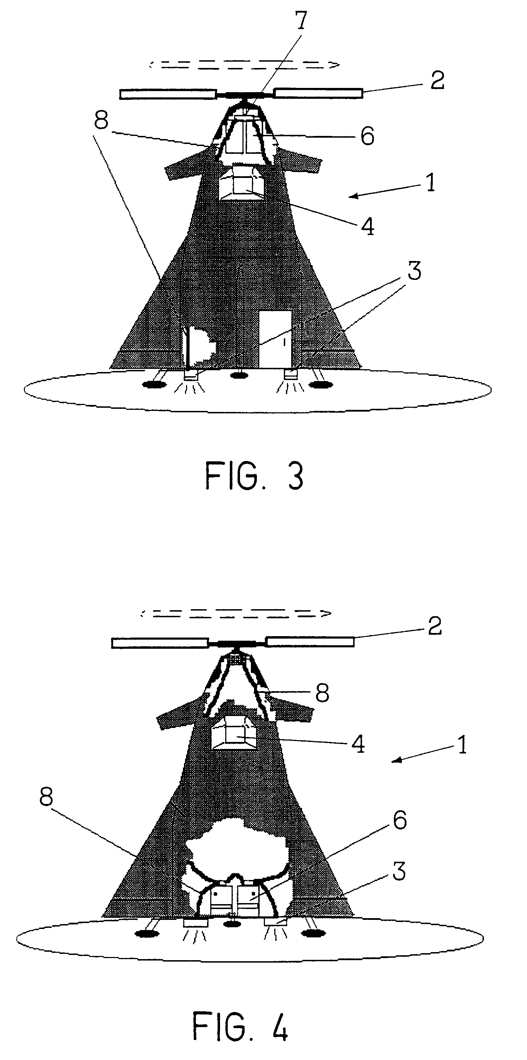

it provides a blade rotor 2, directly powered by the engine or a hydraulic system, as it will be seen making reference to the figures 3 - 5, and two rear, swingable jet engines or ducted turbofan propellers 3.

Rotor blades 2 are designed either to provide a vertical thrust when the vehicle is in the vertical attitude, and to provide a horizontal thrust when the aircraft is in the horizontal attitude, and they remain always in the same position.

Aircraft shown in figure 1 further provides a swingable piloting cabin 4, as well as a charge module, for passengers or freights, which is also swingable.

Solution schematically shown in figure 2 shows a passengers aircraft 11, providing two rotor blades 12, in this case too designed to provide a vertical thrust (take-off - landing) and a horizontal thrust (standard flight conditions).

Jet engines 13, or ducted turbofan propellers are provided behind the aircraft cabin.

Beyond the swingable piloting cabin 14, also the passengers cabin 15 is swingable. Obviously, this solution could be realised also for freightage, as well as the solution of figure 1 could be realised for passengers instead of freight.

As already said, pilot cabin 4 or 14 and passenger area 5 or 15 of the aircraft are realised as tiltable modules maintaining the horizontal position of the floor and the ceiling parallel with respect to the ground during any flying phase, from take-off to the transition to the horizontal flight, thus avoiding problems or the pilots, the passengers or the freights.

In the solution shown in figure 3, main engines 5 are provided on the front portion of the aircraft according to the invention, and it is provided a mechanical transmission 7 to the rotor blades 2, while a hydraulic transmission 8 is provided for rear ducted turbofan propellers 3, that can also be replaced by jet engines different with respect to the main engines.

Instead, in the solution shown in figure 4, main engines 6 are provided on the rear part of the aircraft 1 according to the invention, and a hydraulic transmission 8 is provided both for rotor blades 2 and for rear ducted turbofan propellers 3, that can also be replaced by jet engines different with respect to the main engines.

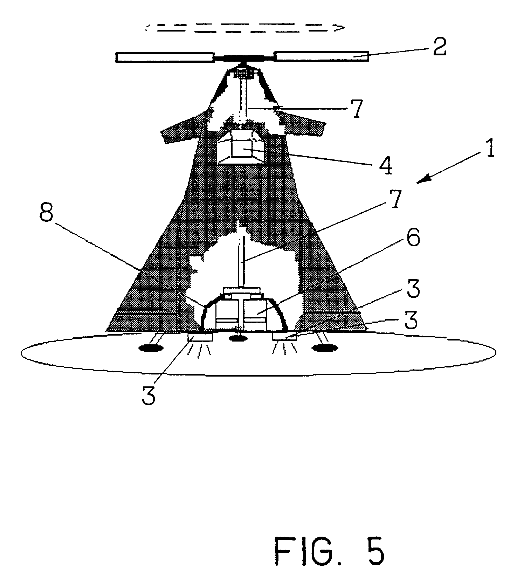

Finally, in the solution shown in figure 5, main engines 6 are provided on the rear part of the aircraft 1 according to the invention, and are coupled by a mechanical transmission 7 to the rotor blades 2, while a hydraulic transmission 8 is provided for rear ducted turbofan propellers 3, that can also be replaced by jet engines different with respect to the main engines.

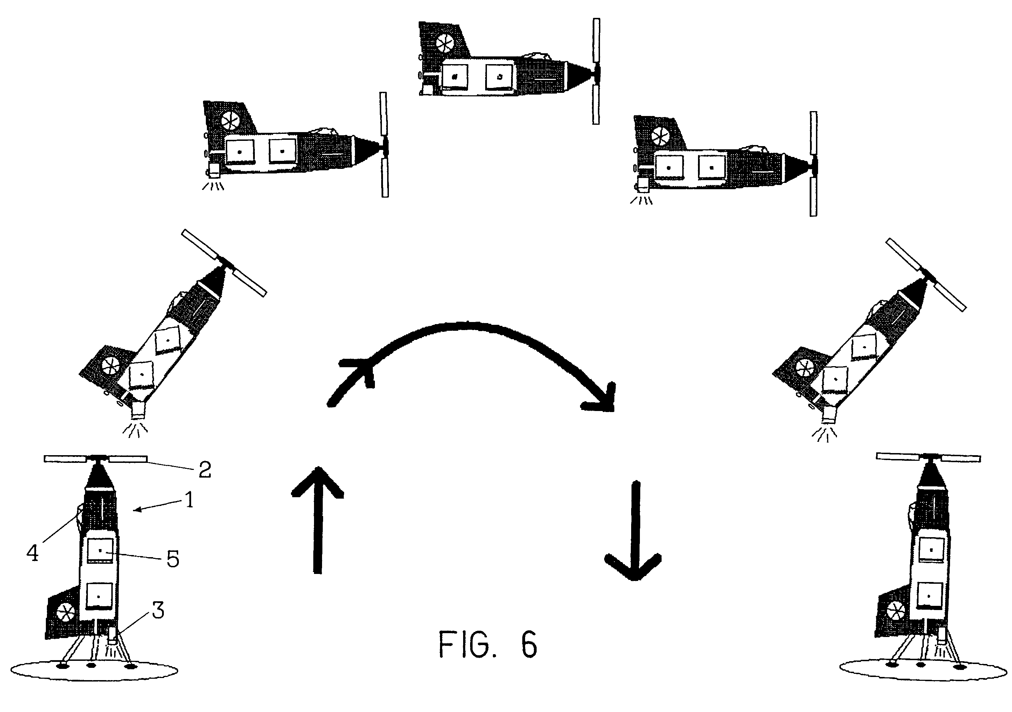

The different flying phases of an aircraft according to the invention are shown in figure 6.

As it can be noted, take-off occurs with the front portion, or nose, in a vertical position, so that rotor 2 provides a vertical thrust and jet engines or ducted turbofan propellers 3 are in a vertical direction.

During the transition phase, modules 4 and 5 follow the movement of the cabin, so that pilots and passengers, or freights, are not subjected to any effect due to the attitude variation. Jet engines 3 always remain in a vertical position, with the thrust directed downward, and are deactivated after the completion of the transition phase in order to reduce the flight costs and to guarantee sufficient autonomy for the following landing phase.

The same steps, obviously in a reverse order, occur for the transition from horizontal flight to vertical flight.

Vertical take-off and landing capability (VTOL) is ensured by the vertical integrated thrust of VTOL rotor blades 2 powered by the output shaft and by he jet engines 3 or rockets or ducted turbofan propellers.

Alternatively, it can be provided that one or more VTOL rotor blades 2 are powered by suitably sized, light and efficient hydraulic actuators, actuated by a hydraulic system connected to, and activated by the thrust source of the main engines as shown in figures 3 - 5.

One or more tiltable auxiliary jet engines or rockets 3 (e.g. derived from radio-controlled missiles or targets), or hydraulically (or non) activated ducted turbofan propellers, provided in the lower rear part or the aircraft, integrate the main engine and rotor blade 2 thrust during the vertical take-off or landing.

Said jet engine(s) or rocket(s), or ducted turbofan propellers, by its thrust further ensures also the transition phase from VTOL to HF (and vice versa).

As a consequence of the above, the operative cost of one hour of flight of the aircraft according to the invention can be maintained for about 90% of the flight at the level of the operative costs of turbo-propeller aircrafts having the same sizes since VTOL phase, which is more expensive, lasts no more than 10% of the total time.

On the other hand, HF features of the aircraft allow to recover the increased cost of the VTOL phase, for the reasons already described before.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Vertical take-off and landing, aerodynamically self-sustained horizontal flight hybrid aircraft (1,11) comprising a propulsion system providing at least a fixed blade propeller/rotor(2,12) on the front part of the aircraft, connected to the main engine (s) of the aircraft, the piloting cabin(4,14) and the passenger area(5,15) being realised as swingable modules, in such a way to continuously maintain the horizontal position of the pavement and of the ceiling parallel with respect to the ground during each flying phase, i.e. during the take-off, the transition phase and the horizontal flight, and vice versa, so that said aircraft can take off with a vertical attitude **characterized by** at least one auxiliary engine,(3,13) placed in the rear part of the aircraft, said auxiliary engine being progressively tiltable and swingable between two limit positions, respectively a vertical and a horizontal position, so that said aircraft after taking-off in the vertical attitude can progressively change the attitude, by the help of the rear auxiliary tiltable engines, reaching a completely horizontal attitude, and vice versa, and coming back in the vertical attitude during the landing.

2. Vertical take-off and landing, aerodynamically self-sustained horizontal flight hybrid aircraft according to claim 1, **characterised in that** said propulsion system comprised of one or more propellers-rotors (2, 12) and of at least one tiltable auxiliary engine(3,13) is actuated by a hydraulic system operated by the main engine(s).

3. Vertical take-off and landing, aerodynamically self-sustained horizontal flight hybrid aircraft according to one of the preceding claims, **characterised in that** coupling between the main engine(s) and said propulsion system comprised of at least one blade propeller/rotor (2,12) is of the mechanical kind.

4. Vertical take-off and landing, aerodynamically self-sustained horizontal flight hybrid aircraft according to one of the preceding claims 1 -2, **characterised in that** coupling between the main engine(s) and said propulsion system comprised of at least one blade propeller/rotor(2,12) is of the hydraulic kind.

5. Vertical take-off and landing, aerodynamically self-sustained horizontal flight hybrid aircraft according to one of the preceding claims, **characterised in that** said at least one tiltable auxiliary engine is comprised of at least one jet engine (3,13) or a rocket or of at least a hydraulically powered or not, ducted turbofan propeller, or any other suitable thrust means.

6. Vertical take-off and landing, aerodynamically self-sustained horizontal flight hybrid aircraft according to one of the preceding claims, **characterised in that** said at least one blade rotor is realised in such a way to obtain both a vertical thrust, when the aircraft has a vertical attitude, and a horizontal thrust, when the aircraft has an horizontal attitude.

7. Vertical take-off and landing, aerodynamically self-sustained horizontal flight hybrid aircraft according to one of the preceding claims, **characterised in that** more tiltable auxiliary engines are provided to support the take-off and landing phases and swinging to guarantee the transition phase between vertical flight and horizontal flight and vice versa.

## Patentansprüche

1. Hybrides aerodynamisch selbstauftreibendes, horizontal fliegendes, vertikal startendes und landendes Flugzeng (1,11) mit einem Antriebssystem enthaltend mindesten eine Festflügel - Schraube - Rotor - Anordnung (2,12) auf der Vordersite des Flugzeugs, die mit dem Hauptmotor, bzws. Mit den Hauptmotoren des Flugzeugs verbunden ist, wobei der Pilotenraum (4,14) und der Fluggastraum (5,15) als schwingbare Module ausgeführt sind, sodass die waagerechte Lage des Bodens und der Decke, immer parallel zum Erdboden, während aller Flugphasen, d.h. während des Abflugs-, Übergang - und Horizontal Betriebes und umgekehrt beibehalten wird, wodurch das vorgenannte Flugzeug in einer Flugtrimmlage abfliegen kann, gekennzeichmet durch mindestns einem an der Heckseite angeordneten Hilfsmotor (3,13), wobei der vorgenannte Hilfsmotor stufenweise zwischen zwei Grenzlagen und zwar senkrechter und waagerachter Lage geneigt und geschwungen werden kann, so dass das vorgenannte Flugzeug, nach dem Abflug in einer vertikalen Flugtrimmlage, diese progressiv bis zur vollkommen horizontalen Flugtrimmlage, und viceversa, mit Hilfe des Hilfsmotors ändern vermag, wobei es in die vertikale Flugtrimmlage beim Landen zurückkommt.

2. Hybrides aerodynamisch selbstauftreibendes, horizontal fliegendes, vertikal startendes und landendes Flugzeugnach Anspruch 1, **dadurch gekennzeichnet, dass** das vorgenannte Antriebssystem, das mit mindestans einer Schraube - Rotor - Anordung (2,12) und einem kippbaren Hilfsmotor (3,13) versehen ist, durch ein hydraulisches, vermittels des Hauptmotors angetriebens System betrieben wird.

3. Hybrides aerodynamisch selbstauftreibendes, horizontal fliegendes, vertikal startendes und landendes Flugzeug nach je einem der vorhergehenden Ansprüche, **dadurch gekennzeichnet, dass** die Kupplung zwischen dem oder den Hauptmotoren und dem vorgenannten, mit mindsten einer Schraube - Rotor - Anordnung (2,12) verschenen Antriebssystem, der mechanischen Art ist.

4. Hybrides aerodynamisch selbstauftreibendes, horizontal fliegendes, vertikal startendes und landendes Flugzeug nach einem der vorhergehenden Ansprüche 1-2, **dadurch gekennzeichnet, dass** die Kupplung zwischen dem oder den Hauptmotoren und dem vorgenannten, mit mindsten einer Schraube - Rotor - Anordnung (2,12) verschenen Antriebssystem, mechanischer Art ist.

5. Hybrides aerodynamisch selbstauftreibendes, horizontal fliegendes, vertikal startendes und landendes Flugzeug nach je einem der vorhergehenden Ansprüche, **dadurch gekennzeichnet, dass** der mindesten ein kippbarer Hilfsmotor aus mindestens einem Strahltriebwerk (3,13) oder einem Raketenmotor oder einer gegebenfalls hydraulisch betriebener Mantelschraube - Turbina oder einer angebrachten Antriebsanordnung besteht.

6. Hybrides aerodynamisch selbstauftreibendes, horizontal fliegendes, vertikal startendes und landendes Flugzeug nach je einem der vorhergenenden Ansprüche, **dadurch gekennzeichnet, dass** die vorgenannte mindestus eine Schranbe - Rotor - Anordnung so ausgeführt ist, dass ein vertikaler Schub bei einer vertikalen Flugtrimmlage und ein horizontaler Schub bei einer horizontalen Flugtrimmlage des Flugzugs erreicht wird.

7. Hybrides aerodynamisch selbstauftreibendes, horizontal fliegendes, vertikal startendes und landendes Flugzeug nach je einem der vorhergehenden Ansprüche, **dadurch gekennzeichnet, dass** mehrere kippbare Hilfsmotore vorgeschen sind, um die Ablug - und Landephasen zu erleichtern und um durch Schwenkungen die Übergangsphasen zwischen der vertikalen und horizontalen Flugtrimmlage und umgekehrt zu gewährleisten.

## Revendications

1. Avion hybride à décollage et atterrissage verticaux, à vol horizontal et à autosustentation aérodynamique (1, 11) comprenant un système de propulsion ayant au moins une unité rotor-hélice à pale fixe (2,12) sur la partie frontale de l'avion, jointe au moteur (ou moteurs) principal de l'avion, la cabine de pilotage (4, 14) et la cabine de passagers (5, 15) étant réalisées comme des modules flottants, de façon à maintenir continuellement la position horizontale du planchér et du plafond parallèlement au sol pendant chaque phase de vol, à savoir la phase de décollage, la phase de transition et le vol horizontal et vice versa, de sorte que l'avion puisse décoller en l'attitude de vol vertical, **caractérisé par** au moins un moteur auxiliaire (3, 13) placé dans la partie postérieure de l'avion; ledit moteur auxiliaire étant apt à étre progressivement incliné et tourné entre deux positions limite, à savoir une position verticale et une position horizontale, de sorte que ledit avion apres le décollage en l'attitude vertical puisse changer progressivement l'attitude avec l'aide des moteurs. auxiliaires inclinables postérieurs, en atteignant une attitude complètement horizontale, et vice versa et en retournant à l'atitude verticale pendant l'atterrissage.

2. Avion hybride à décollage et atterrissage verticaux, à vol horizontal et à autosustentation aérodynamique selon la revendication 1, **caractérisé en ce que** ledit système de propulsion comprenant au moins une unité hélices/rotors (2, 12) et au moins un motor auxiliaire inclinable (3, 13), est entrainé par un systèm hydraulique actionné par le moteur (s) principal (s).

3. Avion hybride à décollage et atterrisage verticaux, à vol horizontal et à autosustentation aérodynamique selon une quelconque des revendication précédentes, **caractérisé en ce que** le couplage entre le motor (s) principal et ledit système de propulsion comprenant au moins une unité hélice-rotor (2, 12), est de genre mècanique.

4. Avion hybride à décollage et atterrisage verticaux, à vol horizontal et à autosustentation aérodynamique selon les revendications précédentes 1 et 2, **caractérisé en ce que** le couplage entre le motor (s) principal (s) et ledit système de propulsion comprenant au moins une unité hélice-rotor (2, 12), est de genre hydraulique.

5. Avion hybride à décollage et atterrisage verticaux, à vol horizontal et à autosustentation aérodynamique selon une quelconque des revendications précédentes, **caractérisé en ce que** ledit au moins une moteur auxiliaire inclinable comprend au moins un moteur à reaction ou un moteur-fusée ou au moins une propulsion carénée actionée hydrauliquement ou non ou un autre convenable moyen de propulsion.

6. Avion hybride à décollage et atterrisage verticaux, à vol horizontal et à autosustentation aérodynamique selon une quelconque des revendications précédentes, **caractérisé en ce que** au moins un rotor à une pale est réalisé de façon à obtenir une propulsion verticale quand l'avion se trouve en l'attitude verticale et une propulsion horizontale, quand l'avion se trouve en l'attitude horizontale.

7. Avion hybride à décollage et atterrisage verticaux, à vol horizontal et à autosustentation aérodynamique selon une quelconque des revendications précédentes, **caractérisé en ce que** plusieurs moteurs auxiliaires inclinables sont prévus pour soutenir les phases de decollage et de atterrissage, pour garantir en tournant la phase de transition entre le vol horizontal et le vol vertical et vice versa.
